# EUROPÄISCHE PATENTSCHRIFT

(11) **EP 3 313 737 B1**
(45) Veröffentlichungstag und Bekanntmachung des Hinweises auf die Patenterteilung: **26.12.2018**
(21) Anmeldenummer: 16726896.0
(22) Anmeldetag: 06.06.2016
(51) Int. Cl.: B65B 35/44, B65B 43/52, B65B 57/04, B65B 61/20, B65G 47/08, B65G 47/26, B65G 47/31, B65G 49/05, B65B 35/24

(54) **VERPACKUNGSANLAGE SOWIE VERFAHREN ZUM BETREIBEN EINER VERPACKUNGSANLAGE**
PACKAGING MACHINE AND METHOD FOR OPERATION OF THE PACKAGING MACHINE
MACHINE D'EMBALLAGE ET PROCÉDÉ D'OPERATION DE LA MACHINE D'EMBALLAGE

(30) Priorität: 29.06.2015 DE 102015110390
(43) Veröffentlichungstag der Anmeldung: 02.05.2018
(73) Patentinhaber: SIG Technology AG, 8212 Neuhausen am Rheinfall (CH)
(72) Erfinder: DÖRENBERG, Udo, 50171 Kerpen (DE)
(74) Vertreter: Cohausz & Florack
(86) Internationale Anmeldenummer: PCT/EP2016/062761
(87) Internationale Veröffentlichungsnummer: WO 2017/001150

(56) Entgegenhaltungen:
- EP-A1- 2 075 660
- WO-A2-01/19677

## Beschreibung

Der Gegenstand betrifft eine Verpackungsanlage sowie ein Verfahren zum Betreiben einer Verpackungsanlage.

Verpackungsanlagen im Sinne des Gegenstands werden insbesondere im Anschluss an die Abfüllung von Verpackungen (nachfolgend auch kurz Packungen genannt) betrieben. Gefüllte Verpackungen, insbesondere Lebensmittelpackungen, werden in Verpackungsanlagen weiter verarbeitet, beispielsweise mit Strohhalmen versehen und in größeren Gebinden, beispielsweise je Gebinde zu vier, sechs, acht Verpackungen verpackt und dergleichen.

Hierbei werden in verschiedensten Verarbeitungseinheiten (auch Verpackungseinrichtungen genannt) die gefüllten Verpackungen weiter verarbeitet. Jede einzelne Verpackungseinrichtung hat dabei eine Nennausbringung und eine Einstellausbringung. Die Nennausbringung bestimmt die Anzahl der Packungen pro Zeiteinheit, welche durch die Verpackungseinrichtung ausgebracht werden kann und kann auch als Nennleistung bezeichnet werden. Die Einstellausbringung bestimmt die tatsächliche Anzahl der Verpackungen, die pro Zeiteinheit ausgebracht werden und kann auch als aktuelle Leistung bezeichnet werden. Die Anzahl an Verpackungen, die eine Verpackungseinrichtung pro Zeiteinheit aufnehmen kann, kann auch als Aufnahmeleistung bezeichnet werden. Diese ist in der Regel identisch zur Einstellausbringung, insbesondere wenn in der Verpackungseinrichtung, was die Regel darstellt, die Anzahl der eingebrachten Verpackungen gleich der Anzahl der ausgebrachten Verpackungen ist.

In einer Verpackungsanlage sind nacheinander (stromabwärts) verschiedenste Verpackungseinrichtungen vorgesehen, welche insbesondere verschiedene Nennausbringungen und Einstellausbringungen aufweisen. Somit ist in der Regel auch die Aufnahmeleistung der verschiedenen Verpackungseinrichtungen unterschiedlich. Vor und nach jeder einzelnen Verpackungseinrichtung ist ein Band vorgesehen, welches insbesondere Teil der jeweiligen Verpackungseinrichtung ist. Am Einlauf der Verpackungseinrichtung ist ein Einlaufband vorgesehen und am Auslauf der Verpackungseinrichtung ist ein Auslaufband vorgesehen.
Da die Verpackungseinrichtungen sequentiell hintereinander angeordnet sind, ist ein störungsfreier Betrieb notwendig, um zu verhindern, dass sich Verpackungen auf den Bändern zurückstauen.
Herkömmlicherweise wird ein Stau am Einlauf einer Verpackungseinrichtung dadurch verhindert, dass im Bereich des Einlaufbandes ein Klemmer bzw. Stopper vorgesehen ist, der den Weitertransport der Verpackungen zum Einlauf der Verpackungseinrichtung verhindert. Nachfolgende Verpackungen laufen auf die durch den Stopper gestoppte Verpackung auf und bilden einen Stau.
Bei herkömmlichen Anlagen laufen die Verpackungen in undefinierten Abständen zueinander, insbesondere können sich die Verpackungen auf den Bändern gegenseitig berühren, insbesondere im Falle eines Staus. Dies kann insbesondere bei Weichverpackungen problematisch sein, da diese sich bei gegenseitiger Berührung untereinander beschädigen können. Insbesondere in Kurven der Transportbänder können Kanten der Verpackungen gegen Kanten von benachbarten Verpackungen gedrückt werden und was die benachbarten Verpackungen beschädigen kann.

Die WO0119677 offenbart eine Vorrichtung mit mehreren Förderern, die über eine Steuerung koordiniert werden.

Aus diesem Grunde lag dem Gegenstand die Aufgabe zugrunde, eine Verpackungsanlage zur Verfügung zu stellen, welche ein schonendes Abpacken von gefüllten Verpackungen ermöglicht.
Diese Aufgabe wird gegenständlich durch eine Verpackungsanlage nach Anspruch 1 sowie ein Verfahren nach Anspruch 16 gelöst.

Eine gegenständliche Verpackungsanlage verfügt insbesondere über die eingangs genannten Verpackungseinrichtungen. Jede dieser Verpackungseinrichtungen verfügt vorzugsweise über ein Einlaufband und ein Auslaufband.

Darüber hinaus ist gegenständlich vorgeschlagen, dass zwischen jeweils einem Auslaufband und einem Einlaufband ein Transportband vorgesehen ist, welches unabhängig von Einlaufband und Auslaufband betreibbar ist. Nachfolgend, wenn von Bändern die Rede ist, kann jeweils zumindest eines der Einlaufbänder, Auslaufbänder oder Transportbänder gemeint sein.

Die gegenständliche Verpackungsanlage verfügt über zumindest zwei Verpackungseinrichtungen. Diese können insbesondere ein sogenannter "Straw Applicator" (Strohhalmanbringer) als auch ein sogenannter "Traypacker" (Gebindepackeinheit) sein. Diese und weitere Verpackungseinrichtungen können entlang der Verpackungsanlage sequentiell nacheinander vorgesehen sein. Die Verpackungen durchlaufen nacheinander (stromabwärts) die jeweiligen Verpackungs einrichtungen-

Innerhalb einer gegenständlichen Verpackungsanlage kann am Auslaufband einer Füllmaschine, aus der die gefüllten Verpackungen auslaufen, zunächst zumindest ein so genannter "Buffer Table" (Speichertisch) vorgesehen sei. In den Speichertisch laufen die gefüllten Verpackungen von der Füllmaschine ein und können mit einer Einstellausbringung, welche unterschiedlich zu der Ausbringung der Füllmaschine sein kann, von dem Speichertisch ausgegeben werden.

Jedes Band kann mit einer maximalen Anzahl an Verpackungen bestückt sein, wenn eine maximale Packungsdichte erreicht ist. Eine maximale Packungsdichte kann für die Anlage individuell definiert sein. Die Packungsdichte ist vorzugsweise bestimmt durch die Länge der Verpackungen zuzüglich eines definierten Abstands zwischen zwei Verpackungen. Bezogen auf beispielsweise einen Meter ergibt sich ein Maß für eine Packungsdichte. Gegenständlich kann vorgesehen sein, dass zwischen zwei Verpackungen ein Mindestabstand vorgesehen ist. Somit kann für jede Verpackung zumindest die eigene Länge zuzüglich des Mindestabstands angenommen werden. Die Länge des Bandes dividiert durch dieses Maß der Packungslänge ergibt die maximale Anzahl an Packungen auf dem Band.

Unter Packungsdichte kann die Anzahl der Packungen pro Längeneinheit verstanden werden. Diese ergibt sich aus der Anzahl von Packungen auf dem Band dividiert durch die Bandlänge.

Die Packungsdichte ergibt sich auch aus dem Eintrag an Verpackungen pro Zeiteinheit dividiert durch die Bandgeschwindigkeit. Die Leistung eines Bandes als auch einer Verpackungseinrichtung kann sich ergeben aus der Anzahl an aufgenommenen Verpackungen pro Zeiteinheit. Eine Aufnahmekapazität eines Bandes kann sich aus der Differenz von Maximalgeschwindigkeit des Bandes und Ist-Geschwindigkeit des Bandes multipliziert mit der Differenz aus der maximalen Packungsdichte und der tatsächlichen Ist-Packungsdichte ergeben. Dieses Maß kann angeben, wie viele Packungen mehr pro Zeiteinheit ein Band aufnehmen kann. Eine Ausgabeleistung eines Bandes kann sich bestimmen aus der Ist-Packungsdichte in Packungen pro Längen und der Geschwindigkeit des Bandes.

Gegenständlich wird die Anlage vorzugsweise durch eine zentrale Steuerung derart betrieben, dass vorzugsweise der Durchfluss an Verpackungen pro Zeiteinheit über alle Verpackungseinrichtungen und Bänder konstant ist.

Die gegenständliche Verpackungsanlage verfügt vorzugsweise über zumindest zwei Verpackungseinrichtungen. Jeder dieser Verpackungseinrichtungen ist vorzugsweise ein Einlaufband und ein Auslaufband zugewiesen. Einlaufband und Auslaufband können somit Bestandteil der jeweiligen Verpackungseinrichtung sein. Somit kann Einlaufband und Auslaufband jeweils von der zugehörigen Verpackungseinrichtung betrieben werden.

Zwischen zwei Verpackungseinrichtungen ist gegenständlich ein vorzugsweise eigenständig betriebenes Transportband vorgesehen. Das Transportband nimmt vorzugsweise Verpackungen von dem Auslaufband einer ersten Verpackungseinrichtung auf und transportiert diese Verpackungen an ein Einlaufband einer zweiten Verpackungseinrichtung.

Um nun zu verhindern, dass sich Verpackungen innerhalb der Verpackungsanlage stauen, wird gegenständlich eine zentrale Steuerung vorgesehen. Gegenständlich ist erkannt worden, dass im Verlauf der Verpackungsanlage, d.h. stromabwärts des Verlaufs der Verpackungen, Störungen auftreten können oder Leistungen von einzelnen stromabwärtigen Komponenten geringer sein können, als Leistungen von stromaufwärtigen Komponenten, was zwangsweise zu einem Stau führen würde. Störungen oder Leistungsunterschiede (z.B. durch kurzzeitige Minderleistungen) können dazu führen, dass stromaufwärts hiervon Stauungen auftreten können. Um solche Stauungen zu verhindern und gleichzeitig zu gewährleisten, dass die Verpackungen möglichst einen Mindestabstand zueinander nicht unterschreiten, überwacht die zentrale Steuerung zumindest die Ist-Geschwindigkeiten der Einlaufbände und der Auslaufbände sowie des Transportbandes.

Hierzu ist es möglich, dass die Steuerung über ein Kommunikationsnetz, insbesondere einen parallelen und/oder seriellen Kommunikationsbus mit den jeweiligen Bändern verbunden ist. Insbesondere können an den Bändern Geschwindigkeitssensoren vorgesehen sein. Auch ist es möglich, dass die Geschwindigkeit der Bänder an den Antriebsmotoren der Bänder unmittelbar erfasst wird. Die erfasste Geschwindigkeit der Bänder kann der zentralen Steuerung mitgeteilt werden, so dass in der Steuerung die Ist-Geschwindigkeiten der Bänder der Verpackungsanlage ermittelt sind.

Außerdem ist erkannt worden, dass eine zentrale Information darüber vorliegen sollte, wie die Packungsdichte der einzelnen Bänder ist. Diese Information ist relevant, um zu wissen, ob stromabwärts von einer bestimmten Verpackungseinrichtung noch Aufnahmekapazität besteht, so dass die Einstellausbringung einer Verpackungseinrichtung gegebenenfalls erhöht werden kann, in dem die Leistung der stromabwärtigen Komponenten ebenfalls erhöht wird.

Die Ist-Packungsdichte kann die durch die zentrale Steuerung durch an den Bändern angeordnete Sensoren erfasst werden. Mit Hilfe der Sensoren kann erfasst werden, wie viele Verpackungen pro Zeiteinheit den Sensor passieren. In Kenntnis der Geschwindigkeit eines Bandes kann hieraus die Anzahl der Packung pro Längeneinheit berechnet werden und hieraus die Ist-Packungsdichte in der Steuerung abgeleitet werden.

Um entlang der Verpackungsanlage stromabwärts einen gleichmäßigen Durchfluss von Verpackungen zu gewährleisten, wird vorgeschlagen, dass die zentrale Steuerung abhängig von der Ist-Packungsdichte und den Ist-Geschwindigkeiten zumindest Soll-Geschwindigkeiten für die Einlaufbänder und die Auslaufbänder der Verpackungseinrichtungen sowie das Transportband bestimmt. Mit diesen Sollwerten werden die Motoren der Bänder gespeist und entsprechend werden die Bänder betrieben. Durch die zentrale Steuerung ist es möglich, den Gesamtdurchfluss von Packungen in der Verpackungsanlage zentralisiert zu erfassen und zu steuern. Treten stromabwärts erhöhte Packungsdichten auf, die nahe der maximalen Packungsdichte liegen, kann stromaufwärts gegebenenfalls die Geschwindigkeit der Bänder reduziert werden, um stromabwärts für eine Entlastung zu sorgen.

Dabei kann auch für jede Verpackungseinrichtung, wie nachfolgend noch beschrieben wird, die Einstellausbringung variiert, im gegebenen Fall reduziert werden, so dass neben dem Transport der Verpackungen auch die Einstellausbringung verändert werden kann, was zu einer Variation des Durchflusses durch eine Verpackungseinrichtung führt.

Insbesondere bei der Inbetriebnahme einer Verpackungsanlage, d.h. beim Anfahren der Verpackungseinrichtungen der Verpackungsanlage sollte darauf geachtet werden, dass wenn eine Verpackungseinrichtung angefahren wird, diese nicht unmittelbar danach wieder heruntergefahren oder gedrosselt werden muss. Dies wird dadurch sichergestellt, dass durch die zentrale Steuerung für jede Verpackungseinrichtung überwacht wird, ob die von der jeweiligen Verpackungseinrichtung ausgebrachten Verpackungen auch stromabwärts verarbeitet werden können. Nur für den Fall, dass die zentrale Steuerung feststellt, dass stromabwärts eine Verpackungseinrichtung eine Verarbeitung der Verpackungen ohne Rückstau, d.h. ohne Überschreiten der maximalen Verpackungsdichte bzw. ohne Unterschreiten des minimalen Verpackungsabstandes verarbeitet werden kann, kann die Verpackungseinrichtung angefahren werden. Das gleiche gilt natürlich auch für die stromabwärtigen Bänder, die ebenfalls die erforderliche Leistung haben müssen.

Um in der Steuerung den Durchfluss durch die gesamte Verpackungsanlage steuern zu können, wird vorgeschlagen, dass in der Steuerung zumindest eine Maximalgeschwindigkeit für die jeweiligen Bänder parametriert ist. Hierdurch ist in der Steuerung bekannt, wie hoch eine Geschwindigkeit eines jeden einzelnen Bandes sein kann. Die Soll-Geschwindigkeit sollte dann nicht über die Maximalgeschwindigkeit einstellt werden. Aus der Maximalgeschwindigkeit und der maximalen Packungsdichte kann in der Zentrale auch die maximale Leistung eines Bandes berechnet werden.

Darüber hinaus kann in der Steuerung zumindest eine Länge der Bänder parametriert sein. Abhängig von der Länge der Bänder kann bestimmt werden, wie die Aufnahmekapazität eines jeden Bandes ist. In Kenntnis der definierten Packungslänge, d.h. der tatsächlichen Packungslänge plus definierten Abstand zwischen zwei Packungen vorzugsweise eine halbe Packungslänge, kann ausgerechnet werden, wie viele Verpackungen auf ein jeweiliges Band passen.

Auch wird vorgeschlagen, dass in der Steuerung zumindest eine maximale Packungsdichte für die Bänder abhängig von einer Verpackungsgröße parametriert ist. Insbesondere kann eine Packungsdichte abhängig von einer Gebindegröße sein. In einem Gebinde können eine einzelne Packung oder mehrere Packungen zusammengefasst sein. Der Abstand zwischen zwei Verpackungen bzw. zwischen zwei Gebinden kann mit einem Mindestabstand parametriert sein, der vorzugsweise die Hälfe einer Verpackung bzw. eines Gebindes beträgt. Sind in einem Gebinde beispielsweise sechs Verpackungen und ist die Gebindelänge beispielsweise 30cm, so ist unter Berücksichtigung eines Mindestabstands von 15cm eine maximale Packungsdichte von sechs Packungen pro 45cm, also 13 1/3 Packungen pro Meter erreichbar.

Um zu gewährleisten, dass die von der Steuerung ermittelten Ist-Geschwindigkeiten zueinander korrespondieren, wird vorgeschlagen, dass die Ist-Geschwindigkeit bei einer für alle Bänder gleichen Referenzfrequenz ermittelt wird. D.h., dass beispielsweise alle Bänder gleichzeitig bei einer Referenzfrequenz von beispielsweise 50Hz betrieben werden und bei dieser Referenzfrequenz die Ist-Geschwindigkeit der Bänder durch die Steuerung ermittelt wird. Durch Variation der Frequenz kann nun die Ist-Geschwindigkeit verändert und an eine Soll-Geschwindigkeit angepasst werden, insbesondere in einem linearen Zusammenhang zwischen Frequenz und Geschwindigkeit.

Wie zuvor bereits erläutert, ist der Durchsatz durch die Verpackungsanlage auch abhängig von der Einstellausbringung jeder einzelnen Verpackungseinrichtung. Um die Verpackungseinrichtungen einstellen zu können, wird vorgeschlagen, dass die Steuerung eine Einstellausbringung für jeweils eine Verpackungseinrichtung bestimmt. Diese Bestimmung der Einstellausbringung wird vorzugsweise abhängig von den jeweils stromabwärts einer Verpackungseinrichtung angeordneten Bändern und/oder Verpackungseinrichtungen eingestellt. Insbesondere ist die Einstellausbringung maximal so groß wie die geringste Aufnahmeleistung einer Verpackungseinrichtung stromabwärts der eingestellten Verpackungseinrichtung. Außerdem kann die Leitung eines jeden Bandes bestimmt werden, in dem die maximale Packungsdichte mit der maximalen Geschwindigkeit eines Bandes multipliziert wird und somit festgestellt werden kann, wie viel Packungen pro Zeiteinheit ein Band aufnehmen kann. Das Band mit der geringsten Leistung kann beschränkend für die Einstellausbringung einer stromaufwärtigen Verpackungseinrichtung sein. Die Steuerung überwacht die jeweiligen Leistungen und stellt die Einstellausbringung einer jeweiligen Verpackungseinrichtung entsprechend ein.

Wie bereits erwähnt, kann in der Steuerung eine Aufnahmeleitung eines Bandes aus einer maximalen Packungsdichte und einer maximalen Geschwindigkeit des Bandes bestimmt werden. In dem zuvor erwähnten Beispiel ist die maximale Packungsdichte 13 1/3 Verpackungen pro Meter. Bei einer Geschwindigkeit von 5m pro Sekunde ergibt sich eine Aufnahmeleistung von 66 2/3 Packungen pro Sekunde. Für jedes Band kann die Aufnahmeleistung bestimmt werden. Insbesondere wird die Aufnahmeleistung jedoch für die Transportbänder bestimmt. Einlaufband und Auslaufband sind vorzugsweise so dimensioniert, dass sie zumindest die Nennausbringung der zugeordneten Verpackungseinrichtung abdecken können, also eine Leistung entsprechend der Nennausbringung aufweisen.

Gemäß einem Ausführungsbeispiel wird vorgeschlagen, dass die Steuerung eine Aufnahmekapazität eines Bandes ermittelt. Als Aufnahmekapazität kann der Wert verstanden werden, wie viel Verpackungen pro Zeiteinheit mehr aufgenommen werden können als dies bisher der Fall ist. Hierzu kann beispielsweise die Differenz aus Maximalgeschwindigkeit und Ist-Geschwindigkeit mit der Differenz aus maximaler Packungsdichte und Ist-Packungsdichte multipliziert werden. Ist bekannt, wie viele Verpackungen ein Band mehr pro Sekunde aufnehmen kann und wird dies für alle stromabwärtigen Bänder berechnet, kann gegebenenfalls eine Einstellausbringung einer Verpackungseinrichtung erhöht werden. Dies bedingt, dass die stromabwärtigen Verpackungseinrichtungen jeweils auch eine erhöhte Nennausbringung aufweisen als deren Einstellausbringung, um auch deren Leistung zu erhöhen.

Das Bestimmen der möglichen Erhöhung des Durchsatzes aller Bänder und Verpackungseinrichtungen stromabwärtig einer Verpackungseinrichtung verhindert, dass eine Verpackungseinrichtung mit einer erhöhten Einstellausbringung beaufschlagt wird, welche stromabwärts zu einem Stau führt. Beim Anfahren der Verpackungseinrichtungen wird somit gewährleistet, dass wenn die Verpackungseinrichtung anläuft, die von der Verpackungseinrichtung ausgebrachten Verpackungen stromabwärtig abgenommen werden können. Außerdem wird verhindert, dass nach einem Anlaufen der Verpackungseinrichtung deren Einstellausbringung gedrosselt werden muss, da stromabwärtig ein Stau auftritt. Dies ist nur im Fehlerfall notwendig, da im Regelfall zuvor bekannt ist, wie hoch die maximale Einstellausbringung einer jeweiligen Verpackungseinrichtung sein kann, da die Nennausbringung der stromabwärtigen Verpackungseinrichtungen und die maximalen Leistungen der stromabwärtigen Bänder in der Zentrale bekannt sind. Durch die zentrale Steuerung wird somit ein reibungsloser Betrieb einer Verpackungsanlage mit einer Mehrzahl von Verpackungseinrichtungen gewährleistet.

Gemäß einem Ausführungsbeispiel wird vorgeschlagen, dass die Steuerung für eine stromaufwärts angeordnete Verpackungseinrichtung abhängig von einer Aufnahmeleistung zumindest eines, vorzugsweise aller der stromabwärtigen Bänder sowie von einer Aufnahmeleistung zumindest einer vorzugsweise aller stromabwärtigen Verpackungseinrichtungen eine Einstellausbringung bestimmt. Insbesondere wird die minimale Aufnahmeleistung aller stromabwärtigen Bänder und die minimale Aufnahmeleistung aller stromabwärtigen Verpackungseinrichtungen bestimmt. Der Mindestwert dieser Aufnahmeleistung bestimmt den Wert der Einstellausbringung für die Verpackungseinrichtung, die eingestellt wird. Hierdurch wird gewährleistet, dass die von der Verpackungseinrichtung ausgebrachten Verpackungen stromabwärtig auch stets abgenommen und verarbeitet werden können, ohne eine Stau zu erzeugen, bei gleichzeitiger Gewährleistung des Mindestabstands zwischen zwei Gebinden bzw. Verpackungen.

Wie eingangs bereits erläutert, ist in einer Verpackungsanlage vorzugsweise nach der Füllmaschine ein Speichertisch vorgesehen. Dieser Speichertisch kann eine große Anzahl an Verpackungen von der Füllmaschine aufnehmen, ohne diese an seinem Auslaufband wieder unmittelbar auszugeben zu müssen. Somit kann der Speichertisch als Puffer dienen, der zunächst überschüssige Verpackungen aufnimmt. Ein Speichertisch ist vorzugsweise die erste Verpackungseinrichtung entlang mehrerer stromabwärts nacheinander angeordneter Verpackungseinrichtungen einer Verpackungsanlage. Eine Steuerung der jeweiligen Verpackungseinrichtungen und Bänder erfolgt vorzugsweise jeweils stromabwärtig eines Speichertisches, insbesondere werden stromabwärts eines Speichertisches die Soll-Geschwindigkeit und/oder die Einstellausbringung bestimmt. Die Steuerung überwacht vorzugsweise jeweils Verpackungseinrichtungen zwischen zwei Speichertischen, sofern vorhanden bzw. zwischen einem Speichertisch und einem Ende der Verpackungsanlage.

Um den Durchsatz an Verpackungen durch die Verpackungsanlage zu optimieren, wird vorgeschlagen, dass die Steuerung stets die Einstellausbringung sowie die Geschwindigkeit der Bänder überwacht und diese so einstellt, dass möglichst die maximale Packungsdichte bei maximaler Geschwindigkeit der Bänder erreicht wird. Dies ist beim Anlaufen einer Verpackungseinrichtung in der Regel nicht möglich, da die Anzahl der ausgebrachten Verpackungen einer Verpackungseinrichtung mit der Zeit während des Anlaufens ansteigt. Dieses Ansteigen der Anzahl der ausgebrachten Verpackungen muss jedoch dazu führen, dass die stromabwärtigen Bänder und Verpackungseinrichtungen ihre Leistungen erhöhen müssen bevor, spätestens jedoch wenn die maximale Packungsdichte erreicht ist. Um den Durchsatz zu verbessern, wird vorgeschlagen, dass die Steuerung die Einstellausbringung und/oder die Soll-Geschwindigkeit iterativ ausgehend jeweils von einem Speichertisch für die stromabwärts angeordneten Bänder und/oder Verarbeitungseinrichtungen bestimmt.

Hierbei kann das Einstellen jeweils basierend auf den von diesen stromabwärts angeordneten Bändern und/oder Verarbeitungseinrichtungen bestimmt werden. Die Iteration kann fortlaufend jeweils vom stromabwärts gesehen letzten Band bzw. letzter Verarbeitungseinrichtung bis zu stromabwärts gesehen ersten Verarbeitungseinrichtung bzw. erstem Band erfolgen. Es wird stromaufwärts von der letzten Verarbeitungseinrichtung oder dem letzten Band erfasst, wie hoch die jeweilige Leistung ist und/oder ob noch Aufnahmekapazität besteht. Abhängig von der kleinsten erfassten Leistung wird dann stromabwärts von der ersten Verpackungseinrichtung bzw. dem ersten Band die Einstellausbringung bzw. die Geschwindigkeit entsprechend eingestellt. Diese Überwachung wird iterativ jeweils über alle Verpackungseinrichtungen und Bändern durchgeführt und sofern ein stromabwärtiges Band oder stromabwärtige Verpackungseinrichtung Aufnahmekapazität hat, kann deren Leistung erhöht werden, was dazu führt, dass stromaufwärts die Verpackungseinrichtung bzw. Bänder in ihren jeweiligen Leistungen ebenfalls erhöht werden können.

Um zu verhindern, dass im Fehlerfall eines stromabwärts angeordneten Bandes oder einer stromabwärts angeordneten Verarbeitungseinrichtung die Verpackungen sich in einer stromaufwärtigen Verpackungseinrichtung zurückstauen, wird vorgeschlagen, dass ein Auslaufband zumindest eine solche Länge hat, dass das Auslaufband unter Berücksichtigung der maximalen Packungsdichte jeweils alle innerhalb der Verpackungseinrichtung in Verpackung befindlichen Verpackung aufnehmen kann. Somit ist sichergestellt, dass jede Verpackungseinrichtung im Fehlerfall leer laufen kann, also alle aktuell verarbeiteten Verpackungen aus der Verpackungseinrichtung auf das Auslaufband laufen können.

Zur Minimierung der Anzahl der Sensoren wird vorgeschlagen, dass jeweils genau ein eine Verpackung erfassender Sensor an einem Band angeordnet ist. Insbesondere ist der Sensor an einem stromaufwärtigen Band im Bereich einer Übergabestelle zu einem angrenzenden stromabwärtigen Band vorgesehen.

Gemäß einem Ausführungsbeispiel wird vorgeschlagen, dass die Zentrale eine Anforderung von Verpackungen von einer Verarbeitungseinrichtung empfängt, insbesondere dass die Anforderung einer Angabe einer Aufnahmeleistung enthält. Ee Verpackungseinrichtung kann somit einer Zentrale melden, wenn sie noch Aufnahmekapazität hat, insbesondere wenn die Einstellausbringung geringer ist als die Nennausbringung. Abhängig davon, ob Verpackungseinrichtungen Aufnahmekapazität haben oder nicht, kann die Zentrale die stromaufwärts dieser Verpackungseinrichtung angeordneten Bänder und/oder Verpackungseinrichtungen derart einstellen, dass die Einbringung an Verpackungen an der Verpackungseinrichtung der angegebenen Aufnahmeleistung angenähert ist. Somit kann die Leistung aller stromaufwärtigen Verpackungseinrichtungen und/oder Bänder jeweils individuell erhöht werden, um die stromabwärtige Verpackungseinrichtung mit der maximalen Leistung zu betreiben.

Gemäß einem Ausführungsbeispiel wird vorgeschlagen, dass die Zentrale die Aufnahmeleistung aller Bänder und/oder Verpackungseinrichtungen stromabwärts eines Speichertisches erfasst. Abhängig davon kann die Zentrale die Einstellausbringung des Speichertisches der minimalen erfassten Aufnahmeleistung angenähert sein, und diese vorzugsweise nicht überschreiten. Somit wird das Ausbringen des Speichertisches an das schwächste Glied in der stromabwärtigen Kette von Verarbeitungseinrichtungen und Bändern angepasst.

Gemäß einem Ausführungsbeispiel wird vorgeschlagen, dass die Zentrale die Soll-Geschwindigkeiten der Bänder und die Einstellausbringung der Verarbeitungseinrichtung derart einstellt, dass der Durchsatz entlang der Anlage konstant ist. Hierdurch wird gewährleistet, dass die Anzahl der pro Zeiteinheit durch die Verpackungsanlage durchlaufenden Verpackungen über alle Verpackungseinrichtungen konstant ist.

Ein weiterer Aspekt ist ein Verfahren zum Betreiben einer solchen Verpackungsanlage. Hierbei wird vorgeschlagen, dass zumindest die Ist-Geschwindigkeit der Einlaufbänder und der Auslaufbänder der Verpackungseinrichtung sowie des Transportbandes ermittelt wird. Außerdem wird zumindest die Ist-Packungsdichte der Einlaufbänder und der Auslaufbänder der Verpackungseinrichtung sowie des Transportbandes ermittelt. Abhängig von der Ist-Packungsdichten und den Ist-Geschwindigkeiten werden zumindest Soll-Geschwindigkeiten für die Einlaufbänder und die Auslaufbänder der Verpackungseinrichtungen sowie das Transportband bestimmt. Diese Erfassung und Bestimmung erfolgt vorzugsweise in einer Zentrale, welche mit den Verpackungseinrichtungen der Verpackungsanlage als auch den Bändern bzw. den Motoren und Sensoren an den Bändern verbunden ist.

Nachfolgend wird der Gegenstand anhand einer Ausführungsbeispiele zeigenden Zeichnung näher erläutert. In der Zeichnung zeigen:
- Fig. 1: eine Verpackungseinrichtung;
- Fig. 2a-c: eine schematische Ansicht von Verpackungen auf einem Band;
- Fig. 3: eine schematische Ansicht eines Bandes mit einer Biegung;

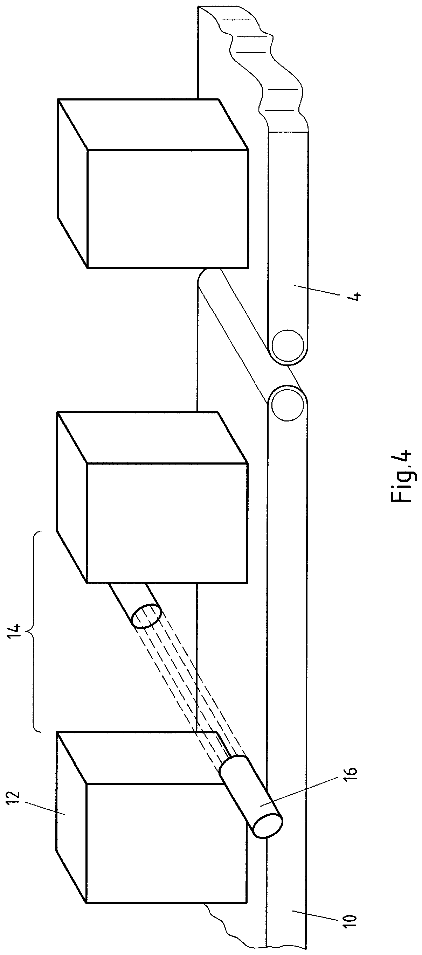

- Fig. 4: eine schematische Ansicht eines Sensors an einem Transportband;
- Fig. 5: eine schematische Ansicht einer Verpackungsanlage.

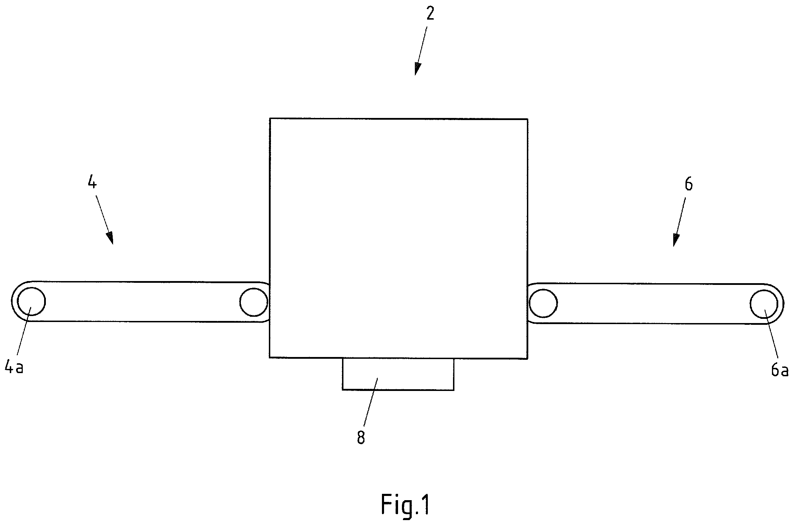

Fig. 1 zeigt eine Verpackungseinrichtung 2. Die Verpackungseinrichtung 2 kann verschiedenste Verpackungsfunktionen repräsentieren. Insbesondere ist die Verpackungseinrichtung 2 eine solche, welche stromabwärts nachfolgend einer Füllmaschine vorgesehen ist. Die Verpackungseinrichtung 2 kann beispielsweise ein "Straw-Applicator", ein "Traypacker", eine Speichertisch oder dergleichen sein. Die Verpackungseinrichtung 2 verfügt über ein Einlaufband 4 und ein Auslaufband 6. Sowohl das Einlaufband 4 als auch das Auslaufband 6 ist über jeweils zumindest einen Motor 4a, 6a, insbesondere einen elektrischen Wechselstrommotor angetrieben. Die Verpackungseinrichtung 2 kann mit einer maximalen Leistung entsprechend einer Nennausbringung, beispielsweise einer Anzahl an Packungen pro Zeiteinheit betrieben werden. Die tatsächliche Leistung einer Verpackungseinrichtung 2 kann über eine Einstellausbringung bestimmt werden, welche vorzugsweise maximal Nennausbringung entspricht und angibt, wie viele Packungen pro Zeiteinheit die Verpackungseinrichtung 2 tatsächlich verarbeitet.

Entsprechend der Einstellausbringung einer Verpackungseinrichtung 2 kann eine Zuführung von Verpackungen über das Einlaufband 4 erfolgen.

Auf dem Einlaufband 4 kann eine Anzahl an Verpackungen angeordnet sein. Hierbei ist ein Mindestabstand zwischen zwei Verpackungen zu beachten, der vorzugsweise zumindest der halben Länge einer Verpackung entspricht. Die sogenannte Packungsdichte auf dem Einlaufband 4, welche vorzugsweise für alle anderen Bänder gilt, kann angeben, wie viel Packungen pro Längeneinheit auf dem Einlaufband 4 angeordnet sind bzw. angeordnet sein dürfen. Multipliziert man die Packungsdichte auf einem Band mit der Bandgeschwindigkeit, so ergibt sich die Leistung eines Bandes, insbesondere die Anzahl an Verpackungen, die am Bandende pro Zeiteinheit ausgegeben werden. Vorzugsweise entspricht die Leistung des Einlaufbands 4 als auch des Auslaufbandes 6 der Einstellausbringung Verpackungseinrichtung 2.

Gegenständlich verfügt die Verpackungseinrichtung 2 über ein Kommunikationsmodul 8. Das Kommunikationsmodul 8 kann einheitlich für die Verpackungseinrichtung 2 vorgesehen sein oder aufgeteilt in einzelne Kommunikationsmodule die jeweils an der Verpackungseinrichtung 2, dem Einlaufband 4 und dem Auslaufband 6 angeordnet sind.

Über das Kommunikationsmodul 8 lassen sich Einstelldaten und Betriebsdaten der Verpackungseinrichtung 2 an eine Zentrale übermitteln. Hierzu kann beispielsweise der Zustand der Verpackungseinrichtung 2 als auch der Bänder 4 und 6, insbesondere ein- und ausgelesen werden. Darüber hinaus kann beispielsweise die aktuelle Einstellausbringung der Verpackungseinrichtung 2 als auch die Geschwindigkeit der Motoren 4a, 6a und somit die Bandgeschwindigkeit der Bänder 4, 6 übermittelt werden. Auch können Soll-Werte empfangen werden, insbesondere für die Einstellausbringung als auch die Geschwindigkeit der Bänder 4 und 6. Über das Kommunikationsmodul 8 ist somit eine zentrale Steuerung der Verpackungseinrichtung 2 als auch des Einlaufbands 4 sowie des Auslaufbands 6 möglich.

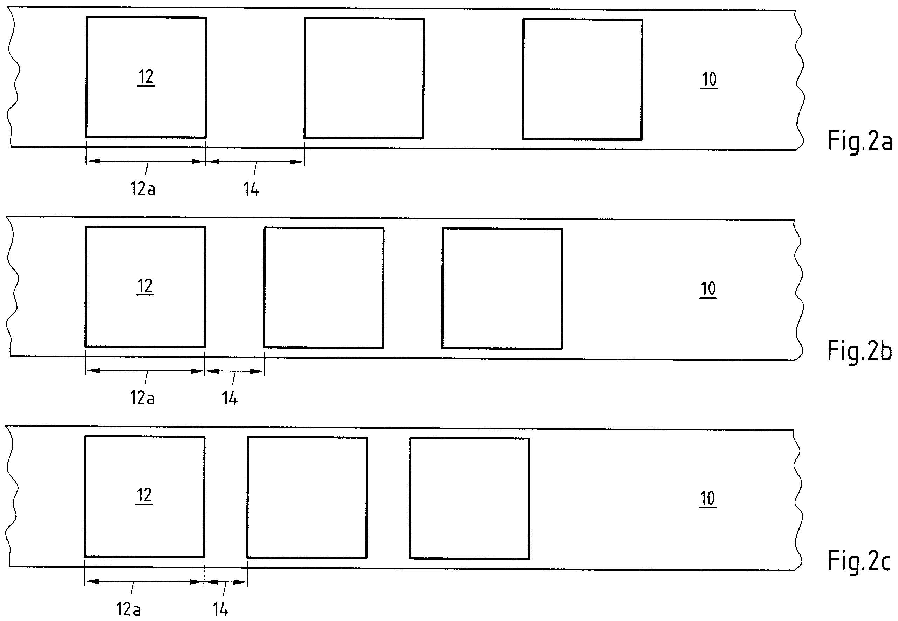

Zwischen einem Einlaufband 4 und einem Auslaufband 6 von zwei benachbarten Verpackungseinrichtungen 2 kann ein Transportband 10 vorgesehen sein. Ein solches Transportband 10 ist beispielsweise in den Figuren 2a-c dargestellt. Die Darstellungen gelten natürlich sinngemäß auch für die Bänder 4, 6. Die Figuren 2a-c zeigen das Transportband 10 in einer Draufsicht mit unterschiedlichen Packungsdichten. Auf dem Transportband 10 werden Verpackungen 12 transportiert. Eine Verpackung 12 hat eine Verpackungslänge 12a, welche die Ausdehnung der Verpackung 12 in Transportrichtung ist. Zwischen den Verpackungen 12 ist ein Abstand 14. Dieser Abstand 14 zwischen Verpackungen 12 wird durch Sensoren, wie nachfolgend noch beschrieben werden wird, erfasst.

Während ein Band 10 betrieben wird, werden Verpackungen 12 auf dem Band 10 in Transportrichtung stromabwärts befördert. Abhängig von der Anzahl an Verpackungen 12 die pro Zeiteinheit auf das Band 10 gebracht werden und der Geschwindigkeit des Bandes 10 stellt sich der Abstand 14 ein. In der Fig. 2a ist der Abstand 14 so groß, dass er weit größer ist, als die Hälfte der Länge 12a. Insbesondere die Länge der Verpackungen 12a kann maßgebend für den minimalen Abstand 14 sein. Es kann ein Mindestabstand 14 definiert sein, der zwischen zwei Verpackungen 12 eingehalten werden muss. Dieser Mindestabstand 14 kann beispielsweise zwischen der Länge 12a und der halben Länge 12a der Verpackung 12 sein. Abhängig vom Abstand 14 ergibt sich eine Packungsdichte auf dem Band 10.

Fig. 2b zeigt das Band 10 mit einer maximalen Packungsdichte. Hierbei ist der Abstand 14 zwischen zwei Verpackungen 12 entsprechend der Hälfte der Länge 12a. Insbesondere wenn der Abstand 14 diesem Mindestabstand entspricht, ist die maximale Packungsdichte auf dem Band 10 erreicht. Ist auch die Maximalgeschwindigkeit des Bandes 10 erreicht, hat das Band keine weitere Aufnahmekapazität und transportiert Verpackungen 12 mit maximaler Leistung. Die Anzahl der Packungen, welche durch das Band 10 pro Zeiteinheit transportiert werden, ergibt sich aus der Geschwindigkeit des Bandes 10 multipliziert mit der Packungsdichte.

Fig. 2c zeigt ein weiteres Beispiel, bei dem die Packungen 12 jedoch zu dicht zueinander transportiert werden. Zu erkennen ist, dass der Abstand 14 geringer ist, als beispielsweise die Hälfte der Packungslänge 12a. In diesem Fall kann es zu Beschädigungen der Verpackungen 12 kommen, welche vorzugsweise Weichverpackungen sind. Eine mögliche Beschädigung kann im Falle von Stauungen auftreten, da die Verpackungen entlang der Bewegungsrichtung an ihren Seitenflächen aneinander anstoßen und somit z.B. Aufdrucke verschmieren können.

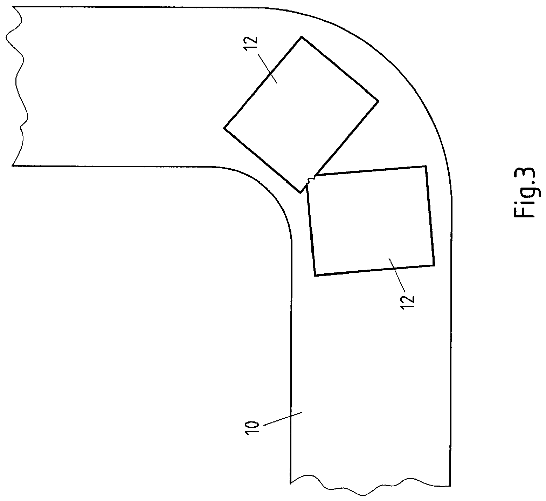

Auch ist eine Beschädigung bei einem Transport der Verpackungen 12 um eine Kurve entlang eines Bandes 10, wie in der Fig. 3 dargestellt, möglich. Ist der Abstand 14 zu gering kann, wie in Fig. 3 dargestellt, eine Seitenkante einer Verpackung 12 in eine Seitenfläche einer vorhergehenden Verpackung 12 gedrückt werden, was zu einer Beschädigung der vorherigen Verpackung 12 führen kann. Beschädigungen der Verpackungen 12 sollen möglichst vermieden werden.

Um nun auf einem Band 10 als auch gegebenenfalls einem der Bänder 4 oder 6 einen Abstand zwischen den Verpackungen 12 detektieren zu können, sind vorzugsweise an den Enden der jeweiligen Bänder 6, 10 Sensoren 16 vorgesehen. Die Sensoren 16 sind beispielsweise Näherungssensoren oder lichtempfindliche Sensoren, wie beispielweise Lichtschranken. Mit Hilfe der Sensoren 16 kann die Zeit erfasst werden, die vergeht, bis eine nachfolgende Verpackung 12 auf eine vorherige Verpackung 12 folgt. Ist die Geschwindigkeit des Bandes 10 bekannt, kann hieraus der Abstand 14 der Verpackungen 12 zueinander berechnet werden.

Die Sensoren 16 können eigenständig oder über das Kommunikationsmodul 8 ihre Messwerte an die Zentrale übermitteln. Auch ist es möglich, dass innerhalb der Sensoren 16 oder an dem Band 10 eine Recheneinheit vorgesehen ist, die zusammen mit der Geschwindigkeit des Bandes den Abstand der Verpackungen 12 berechnet und dieser Abstandsinformation an die Zentrale übermittelt. Abhängig von dem gemessenen Abstand kann eine Verarbeitungseinrichtung 2 hinsichtlich ihrer Ausbringung als auch die Bänder 4, 6, 10 hinsichtlich der Geschwindigkeit eingestellt werden.

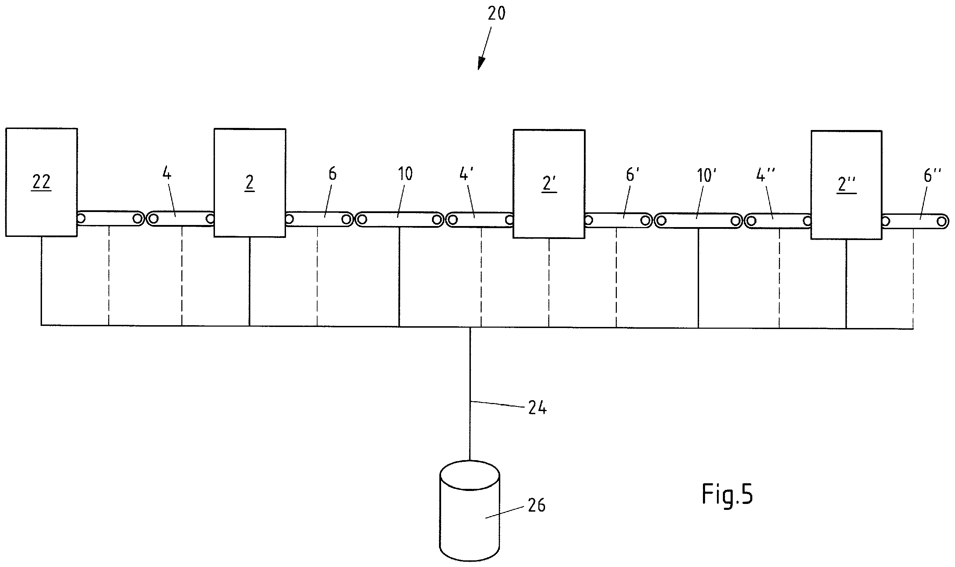

Fig. 5 zeigt eine Verpackungsanlage 20 mit verschiedenen Verpackungseinrichtungen 2, 2', 2". Zu erkennen ist, dass jeder Verpackungseinrichtung 2 ein Einlaufband 4 und ein Auslaufband 6 zugeordnet ist. Zwischen dem Einlaufband 4 und dem Auslaufband 6 ist jeweils ein Transportband 10, 10' angeordnet. Jede Verpackungseinrichtung 2-2" sowie die Füllmaschine 22 als auch die Transportbänder 10, 10' sind über einen Kommunikationsbus 24 mit einer Zentrale 26 verbunden. In der Zentrale 26 laufen insbesondere Informationen zu den jeweiligen Packungsdichten an den Bändern 4, 6, 10 sowie der Geschwindigkeiten der Bänder 4, 6, 10 als auch der Einstellausbringungen der Verpackungseinrichtung 2 ein.

Die Zentrale 26 verwaltet die Steuerung aller Verpackungseinrichtungen 2 sowie aller Bänder 4, 6, 10 zentral und steuert diese vorzugsweise derart, dass stromabwärts, also ausgehend von der Füllmaschine 22 (oder einem Speichertisch) bis zur letzten Verpackungseinrichtung 2" ein möglichst konstanter Durchfluss an Verpackungen gewährleistet ist. Insbesondere soll ein Stau auf einem der Bänder 4, 6, 10 vermieden werden und der Mindestabstand zwischen den Verpackungen 12 auf den Bändern 4, 6, 10 eingehalten werden. Dabei soll insbesondere auf Stopper oder sonstige Klemmvorrichtungen verzichtet werden.

In der Fig. 5 ist beispielsweise die Verpackungseinrichtung 2 ein Speichertisch. Vorzugsweise wird jeweils stromabwärts von einem Speichertisch 2 die Einstellung für die Bänder 4, 6, 10 und die Verpackungseinrichtung 2 und 2" durch die Zentrale 2 gesteuert. Die Füllmaschine 22 liefert Packungen 12, welche abgefüllt und verschlossen sind. Diese Verpackungen 12 laufen über das Einlaufband 4 in den Speichertisch 2. Der Speichertisch 2 speichert zunächst die Packungen 12 zwischen. Zu Beginn, d.h. beim Anlaufen der Verpackungsanlage 20 überwacht zunächst die Zentrale 26, ob am Auslaufband 6" Verpackungen 12 aufgenommen werden können.

Darüber hinaus überwacht die Zentrale 26, ob an dem Transportband 10 Verpackungen 12 aufgenommen werden können. Anschließend überprüft die Zentrale 26 die Nennausbringung der Verpackungseinrichtung 2". Nachfolgend überprüft die Zentrale 26 die Nennausbringung der Verpackungseinrichtung 2' sowie die Möglichkeit, ob die Bänder 4' oder 6' Verpackungen aufnehmen können.

Darüber hinaus überwacht die Zentrale 26, ob das Band 10 Verpackungen aufnehmen und ob das Band 6 Verpackungen aufnehmen kann. Ist dies gewährleistet, kann die Verpackungsanlage 20 bzw. die Verpackungseinrichtung 2, 2' und 2" in Betrieb genommen werden. Hierzu wird durch die Zentrale 26 überprüft, welche der Verpackungseinrichtung 2', 2" bzw. welches der Bänder 4, 6, 10 die geringste Leistung hat. D.h., wenn auf einem Band 4, 6, 10 bereits Verpackungen 12 vorhanden sind, wird dessen Aufnahmekapazität überprüft. Zusätzlich wird die geringste Nennausbringung der Verpackungseinrichtung 2', 2" ermittelt. Der Wert der geringsten Leistung eines Bandes bzw. der geringsten Nennausbringung einer Verpackungseinrichtung 2', 2" wird dazu verwendet, den Speichertisch 2 anzuweisen, mit einer bestimmten Ausbringleistung Verpackungen auf das Band 6 auszubringen.

Anschließend fahren die Bänder sowie die Verpackungseinrichtung 2', 2" an und verarbeiten die von dem Speichertisch 2 ausgegebenen Verpackungen. Während des laufenden Betriebs wird stets überwacht, ob die Einstellausbringung aller stromabwärtigen Verpackungseinrichtungen 2', 2" die Nennausbringung erreichen oder nicht. Falls nein, besteht noch Aufnahmekapazität, so dass gegebenenfalls die Einstellausbringung dieser Verpackungseinrichtungen 2', 2" erhöht werden könnten. Ferner wird laufend überwacht, wie hoch die Packungsdichte auf den jeweiligen Bändern 4, 6, 10 ist und wie groß die Geschwindigkeit der Bänder ist. Ist die maximale Packungsdichte noch nicht erreicht und/oder laufen die Bänder noch nicht mit Maximalgeschwindigkeit, so können die Bänder gegebenenfalls mehr Packungen aufnehmen, haben somit eine Aufnahmekapazität.

Wird festgestellt, dass alle stromabwärtigen Einrichtungen Aufnahmekapazität haben bzw. in ihrer Einstellausbringung erhöht werden können, wird der Speichertisch 2 angewiesen, mit einer erhöhten Rate Packungen auszubringen, so dass die Auslastung und die Packungsdichte über alle Bänder erhöht wird. Dieser Prozess wird fortlaufend iterativ durchgeführt, so dass für jede Verpackungseinrichtung 2, 2', 2" überwacht wird, ob die stromabwärtigen Verpackungseinrichtungen bzw. Bänder noch Aufnahmekapazität haben oder an ihrem Leistungslimit sind. Im erstgenannten Fall können die Aufnahmekapazitäten durch Erhöhung der Einstellausbringung als auch der Geschwindigkeiten der Bänder erhöht werden und somit der Durchsatz durch die Verpackungsanlage 20 erhöht werden.

Durch die zentrale Steuerung 26 wird gewährleistet, dass stets über die gesamte Verpackungsanlage stromabwärtig ein Durchfluss von Verpackungen gewährleistet ist, ohne dass es zu Stauungen kommt oder dass ein Mindestabstand zwischen zwei Verpackungen unterschritten wird.

### Bezugszeichenliste

- 2: Verpackungseinrichtung
- 4: Einlaufband
- 6: Auslaufband
- 4a, 6a: Motor
- 8: Kommunikationsmodul
- 10: Transportband
- 12: Verpackung
- 12a: Länge
- 14: Abstand
- 16: Sensor
- 20: Verpackungsanlage
- 22: Füllmaschine
- 24: Kommunikationsbus
- 26: Zentrale

## Patentansprüche

1. Verpackungsanlage mit
- zumindest zwei sequentiell nacheinander angeordneten Verpackungseinrichtungen, wobei jede Verpackungseinrichtung ein Einlaufband und ein Auslaufband aufweist, und das Einlaufband der Verpackungseinrichtung Verpackungen zuführt und das Auslaufband von der Verpackungseinrichtungen verarbeitete Verpackungen aufnimmt,
- einem zwischen dem Auslaufband einer ersten Verpackungseinrichtung und dem Einlaufband einer zweiten Verpackungseinrichtung angeordneten Transportband, und
- einer zentralen Steuerung,
**dadurch gekennzeichnet,**
- **dass** die zentrale Steuerung zumindest die Ist-Geschwindigkeit der Einlaufbänder und der Auslaufbänder der Verpackungseinrichtungen sowie des Transportbandes ermittelt und
- **dass** die zentrale Steuerung zumindest die Ist-Packungsdichte der Einlaufbänder und der Auslaufbänder der Verpackungseinrichtungen sowie des Transportbandes ermittelt, und
- **dass** die zentrale Steuerung abhängig von der Ist-Packungsdichte und den Ist-Geschwindigkeiten zumindest Soll-Geschwindigkeiten für die Einlaufbänder und die Auslaufbänder der Verpackungseinrichtungen sowie das Transportband derart bestimmt, dass die Verpackungen einen Mindestabstand zueinander nicht unterschreiten.

2. Verpackungsanlage nach Anspruch 1,
**dadurch gekennzeichnet,**
- **dass** in der Steuerung zumindest eine Maximalgeschwindigkeit für die Einlaufbänder und/oder die Auslaufbänder und/oder der Transportbänder parametriert ist und/oder
-- dass in der Steuerung zumindest eine Länge der Einlaufbänder, der Auslaufbänder und/oder der Transportbänder parametriert ist und/oder
-- dass in der Steuerung zumindest eine maximale Packungsdichte für die Einlaufbänder und/oder die Auslaufbänder und/oder die Transportbänder abhängig von einer Verpackungsgröße parametriert ist, wobei insbesondere ein Mindestabstand zwischen zwei Verpackungen auf einem der Bänder der Hälfte der Verpackungslänge entspricht.

3. Verpackungsanlage nach einem der vorhergehenden Ansprüche,
**dadurch gekennzeichnet,**
- **dass** die Steuerung die Ist-Geschwindigkeit bei einer für alle Bänder gleichen Referenzfrequenz ermittelt.

4. Verpackungsanlage nach einem der vorhergehenden Ansprüche,
**dadurch gekennzeichnet,**
- **dass** die Steuerung eine Einstellausbringung für jeweils eine Verpackungseinrichtung bestimmt.

5. Verpackungsanlage nach einem der vorhergehenden Ansprüche,
**dadurch gekennzeichnet,**
- **dass** die Steuerung eine Aufnahmeleistung eines Bandes aus einer maximalen Packungsdichte und einer maximalen Geschwindigkeit des Bandes bestimmt.

6. Verpackungsanlage nach einem der vorhergehenden Ansprüche,
**dadurch gekennzeichnet,**
- **dass** die Steuerung eine Aufnahmekapazität eines Bandes aus der Ist-Packungsdichte und der maximalen Packungsdichte sowie der Ist-Geschwindigkeit und der Maximalgeschwindigkeit des Bandes bestimmt.

7. Verpackungsanlage nach einem der vorhergehenden Ansprüche,
**dadurch gekennzeichnet,**
- **dass** die Steuerung für eine stromaufwärts angeordnete Verpackungseinrichtung abhängig von einer Aufnahmeleistung zumindest eines, vorzugsweise aller der stromabwärtigen Bänder sowie von einer Aufnahmeleistung zumindest einer vorzugsweise aller stromabwärtigen Verpackungseinrichtungen eine Einstellausbringung bestimmt.

8. Verpackungsanlage nach einem der vorhergehenden Ansprüche,
**dadurch gekennzeichnet,**
- **dass** die Steuerung für ein stromaufwärts angeordnetes Band abhängig abhängig von einer Aufnahmeleistung zumindest eines, vorzugsweise aller der stromabwärtigen Bänder sowie von einer Aufnahmeleistung zumindest einer vorzugsweise aller stromabwärtigen Verpackungseinrichtungen eine Soll-Geschwindigkeit bestimmt.

9. Verpackungsanlage nach einem der vorhergehenden Ansprüche,
**dadurch gekennzeichnet,**
- **dass** die Steuerung jeweils für Verpackungseinrichtungen und Bänder stromabwärts eines Speichertisches die Soll-Geschwindigkeiten und/oder Einstellausbringungen bestimmt.

10. Verpackungsanlage nach einem der vorhergehenden Ansprüche,
**dadurch gekennzeichnet,**
- **dass** die Steuerung die Einstellausbringung und/oder die Soll-Geschwindigkeit iterativ ausgehend jeweils von einem Speichertisch für die stromabwärts angeordneten Bänder und/oder Verpackungseinrichtungen, jeweils basierend auf den von diesen stromabwärts angeordneten Bänder und/oder Verpackungseinrichtungen bestimmt.

11. Verpackungsanlage nach einem der vorhergehenden Ansprüche,
**dadurch gekennzeichnet,**
- **dass** ein Auslaufband zumindest eine solches Länge hat, dass das Auslaufband unter Berücksichtigung der maximalen Packungsdichte jeweils alle innerhalb der Verpackungseinrichtung in Verpackung befindlichen Verpackungen aufnehmen kann.

12. Verpackungsanlage nach einem der vorhergehenden Ansprüche,
**dadurch gekennzeichnet,**
- **dass** jeweils genau ein eine Verpackung erfassender Sensor an einem Band angeordnet ist, insbesondere in einem Bereich einer Übergabestelle zu einem angrenzenden Band.

13. Verpackungsanlage nach einem der vorhergehenden Ansprüche,
**dadurch gekennzeichnet,**
- **dass** Zentrale eine Anforderung von Verpackungen von einer Verpackungseinrichtung empfängt, insbesondere dass die Anforderung eine Angabe einer Aufnahmeleistung enthält und dass die Zentral die stromaufwärts dieser Verpackungseinrichtung angeordneten Bänder und/oder Verpackungseinrichtungen derart einstellt, dass die Einbringung an Verpackungen an der Verpackungseinrichtung der angegebenen Aufnahmeleistung angenähert ist.

14. Verpackungsanlage nach einem der vorhergehenden Ansprüche,
**dadurch gekennzeichnet,**
- **dass** die Zentrale Aufnahmeleistungen aller Bänder und/oder Verpackungseinrichtungen stromabwärts einer Speichertisches erfasst und dass die Zentrale die Einstellausbringung des Speichertisches der minimalen erfassten Aufnahmeleistung angenähert ist, diese vorzugsweise nicht überschreitet.

15. Verpackungsanlage nach einem der vorhergehenden Ansprüche,
**dadurch gekennzeichnet,**
- **dass** die Zentrale die Soll-Geschwindigkeiten der Bänder und die Einstellausbringungen der Verpackungseinrichtungen derart einstellt, dass der Durchsatz entlang der Verpackungsanlagen konstant ist.

16. Verfahren zum Betreiben einer Verpackungsanlage nach einem der vorhergehenden Ansprüche,
**dadurch gekennzeichnet,**
- **dass** zumindest die Ist-Geschwindigkeit der Einlaufbänder und der Auslaufbänder der Verpackungseinrichtungen sowie des Transportbandes ermittelt werden und
- **dass** zumindest die Ist-Packungsdichte der Einlaufbänder und der Auslaufbänder der Verpackungseinrichtungen sowie des Transportbandes ermittelt werden, und
- **dass** abhängig von der Ist-Packungsdichte und den Ist-Geschwindigkeiten zumindest Soll-Geschwindigkeiten für die Einlaufbänder und die Auslaufbänder der Verpackungseinrichtungen sowie das Transportband derart bestimmt werden, dass die Verpackungen einen Mindestabstand zueinander nicht unterschreiten.

## Claims

1. Packaging installation comprising
- at least two packaging devices arranged sequentially one after the other, each packaging device having an infeed belt and an outfeed belt, and the infeed belt delivers packagings to the packaging device and the outfeed belt receives packagings which have been processed by the packaging devices,
- a conveyor belt which is arranged between the outfeed belt of a first packaging device and the infeed belt of a second packaging device, and
- a central controller,
**characterised in that**
- the central controller determines at least the actual speed of the infeed belts and of the outfeed belts of the packaging devices and of the conveyor belt, and
- the central controller determines at least the actual packaging density of the infeed belts and of the outfeed belts of the packaging devices and of the conveyor belt, and
- the central controller determines at least desired speeds for the infeed belts and for the outfeed belts of the packaging devices and for the conveyor belt, based on the actual packaging density and on the actual speeds, such that the distance between the packagings does not fall below a minimum distance.

2. Packaging installation according to claim 1,
**characterised in that**
- at least a maximum speed for the infeed belts and/or for the outfeed belts and/or for the conveyor belts is parameterised in the controller, and/or
-- at least a length of the infeed belts, of the outfeed belts and/or of the conveyor belts is parameterised in the controller, and/or
-- at least a maximum packaging density for the infeed belts and/or for the outfeed belts and/or for the conveyor belts is parameterised in the controller, based on a packaging size, whereby in particular a minimum distance between two packagings on one of the belts corresponds to half the packaging length.

3. Packaging installation according to any of the preceding claims,
**characterised in that**
- the controller determines the actual speed at a reference frequency which is the same for all the belts.

4. Packaging installation according to any of the preceding claims,
**characterised in that**
- the controller determines a set output for a respective packaging device.

5. Packaging installation according to any of the preceding claims,
**characterised in that**
- the controller determines a receiving capacity of a belt from a maximum packaging density and a maximum speed of the belt.

6. Packaging installation according to any of the preceding claims,
**characterised in that**
- the controller determines a receiving capacity of a belt from the actual packaging density and from the maximum packaging density as well as from the actual speed and from the maximum speed of the belt.

7. Packaging installation according to any of the preceding claims,
**characterised in that**
- the controller determines a set output for a packaging device arranged upstream, based on a receiving capacity of at least one, preferably of all the belts arranged downstream, and on a receiving capacity of at least one, preferably of all of the packaging devices arranged downstream.

8. Packaging installation according to any of the preceding claims,
**characterised in that**
- the controller determines a desired speed for a belt arranged upstream, based on a receiving capacity of at least one, preferably of all the belts arranged downstream, and on a receiving capacity of at least one, preferably of all of the packaging devices arranged downstream.

9. Packaging installation according to any of the preceding claims,
**characterised in that**
- the controller determines the desired speeds and/or set outputs respectively for packaging devices and belts downstream of a buffer table.

10. Packaging installation according to any of the preceding claims,
**characterised in that**
- the controller determines the set output and/or the desired speed iteratively, based respectively on a buffer table, for the belts and/or packaging devices arranged downstream, respectively based on the belts and/or packaging devices which are arranged downstream thereof.

11. Packaging installation according to any of the preceding claims,
**characterised in that**
- an outfeed belt has at least such a length that the outfeed belt can respectively accommodate all the packages located in a packaging inside the packaging device, while taking into account the maximum packaging density.

12. Packaging installation according to any of the preceding claims,
**characterised in that**
- a sensor, which detects precisely one packaging, is arranged on a respective belt, in particular in a region of a transfer point to an adjoining belt.

13. Packaging installation according to any of the preceding claims,
**characterised in that**
- a control centre receives a request for packagings from a packaging device, in particular **in that** the request contains information about a receiving capacity, and **in that** the control centre adjusts the belts and/or packaging devices which are arranged upstream of this packaging device such that the introduction of packagings in the packaging device approximates the specified receiving capacity.

14. Packaging installation according to any of the preceding claims,
**characterised in that**
- the control centre detects receiving capacities of all the belts and/or packaging devices downstream of a buffer table, and **in that** the control centre approximates the set output of the buffer table to the minimum detected receiving capacity, but preferably does not exceed it.

15. Packaging installation according to any of the preceding claims,
**characterised in that**
- the control centre adjusts the desired speeds of the belts and the set outputs of the packaging devices such that the throughput along the packaging installations is constant.

16. Method for operating a packaging installation according to any of the receding claims,
**characterised in that**
- at least the actual speed of the infeed belts and of the outfeed belts of the packaging devices and of the conveyor belt is determined, and
- at least the actual packaging density of the infeed belts and of the outfeed belts and of the packaging devices and of the conveyor belt is determined, and
- based on the actual packaging density and on the actual speeds, at least desired speeds are determined for the infeed belts and for the outfeed belts of the packaging devices and for the conveyor belt such that the distance between the packagings does not fall below a minimum distance.

## Revendications

1. Machine d'emballage comportant
- deux dispositifs d'emballage agencés l'un derrière l'autre, chaque dispositif d'emballage présentant un convoyeur d'entrée et un convoyeur de sortie, le convoyeur d'entrée du dispositif d'emballage introduit les emballages et le convoyeur de sortie des dispositifs d'emballage prélève les emballages traités,
- une bande transporteuse agencée entre le convoyeur de sortie d'un premier dispositif d'emballage et le convoyeur d'entrée d'un deuxième dispositif d'emballage, et
- une commande centrale,
**caractérisée en ce que**
- la commande centrale détermine au moins la vitesse réelle du convoyeur d'entrée et du convoyeur de sortie des dispositifs d'emballage, ainsi que de la bande transporteuse,
- la commande centrale détermine au moins le débit réel d'emballage du convoyeur d'entrée et du convoyeur de sortie des dispositifs d'emballage, ainsi que de la bande transporteuse, et la commande centrale détermine au moins des vitesses seuil pour le convoyeur d'entrée et le convoyeur de sortie des dispositifs d'emballage, ainsi que la bande transporteuse, en fonction du débit réel et de la vitesse réelle d'emballage, de sorte que les emballages soient séparés les uns des autres au moins d'une distance minimale.

2. Machine d'emballage selon la revendication 1, **caractérisée en ce que**
- dans la commande, au moins une vitesse maximale est paramétrée pour le convoyeur d'entrée et/ou le convoyeur de sortie des dispositifs d'emballage et/ou la bande transporteuse, et/ou
- dans la commande, au moins une longueur est paramétrée pour le convoyeur d'entrée et/ou le convoyeur de sortie des dispositifs d'emballage et/ou la bande transporteuse, et/ou
- dans la commande, au moins un débit maximal d'emballage est paramétré en fonction de la taille de l'emballage pour le convoyeur d'entrée et/ou le convoyeur de sortie des dispositifs d'emballage et/ou la bande transporteuse, où en particulier, la distance minimale entre deux emballages sur un convoyeur correspond à la moitié de la longueur de l'emballage.

3. Machine d'emballage selon l'une des revendications précédentes, **caractérisée en ce que** la commande détermine la vitesse réelle à une fréquence de référence identique pour tous les convoyeurs.

4. Machine d'emballage selon l'une des revendications précédentes, **caractérisée en ce que** la commande détermine un réglage pour chaque dispositif d'emballage.

5. Machine d'emballage selon l'une des revendications précédentes, **caractérisée en ce que** la commande détermine une puissance d'alimentation d'un convoyeur à partir d'un débit maximal d'emballage et d'une vitesse maximale du convoyeur.

6. Machine d'emballage selon l'une des revendications précédentes, **caractérisée en ce que** la commande détermine une capacité d'alimentation d'un convoyeur à partir du débit réel d'emballage, et le débit maximal d'emballage, ainsi que la vitesse réelle et la vitesse maximale.

7. Machine d'emballage selon l'une des revendications précédentes, **caractérisée en ce que** la commande détermine un réglage pour un dispositif d'emballage situé en amont en fonction d'une puissance d'alimentation d'au moins un, de préférence tous les convoyeurs en amont ainsi que d'une puissance d'alimentation d'au moins un, de préférence tous les dispositifs d'emballage en amont.

8. Machine d'emballage selon l'une des revendications précédentes, **caractérisée en ce que** la commande détermine une vitesse seuil pour un convoyeur situé en amont en fonction d'une puissance d'alimentation d'au moins un, de préférence tous les convoyeurs en amont ainsi que d'une puissance d'alimentation d'au moins un, de préférence tous les dispositifs d'emballage en amont.

9. Machine d'emballage selon l'une des revendications précédentes, **caractérisée en ce que** la commande détermine les vitesses seuil et/ou les réglages pour respectivement, les dispositifs d'emballage et les convoyeurs en amont d'une table d'accumulation.

10. Machine d'emballage selon l'une des revendications précédentes, **caractérisée en ce que** la commande détermine le réglage et/ou la vitesse seuil de manière itérative en partant respectivement d'une table d'accumulation pour les convoyeurs et/ou dispositifs d'emballage en amont, sur base respectivement des convoyeurs et/ou dispositifs d'emballage situés en amont.

11. Machine d'emballage selon l'une des revendications précédentes, **caractérisée en ce qu'**un convoyeur de sortie a au moins une longueur telle que le convoyeur de sortie peut réceptionner respectivement tous les emballages se trouvant au sein du dispositif d'emballage en tenant compte du débit maximal de paquets.

12. Machine d'emballage selon l'une des revendications précédentes, **caractérisée en ce que** un capteur saisissant un emballage est agencé sur un convoyeur, en particulier dans la zone d'un site de transfert vers un convoyeur adjacent.

13. Machine d'emballage selon l'une des revendications précédentes, **caractérisée en ce que** la centrale reçoit une exigence d'emballage d'un dispositif d'emballage, en particulier **en ce que** l'exigence contient une donnée de puissance d'alimentation et **en ce que** la centrale règle les convoyeurs et/ou dispositifs d'emballage agencés en amont de ce dispositif d'emballage de sorte que la prise en charge des emballages au dispositif d'emballage est rapprochée de la puissance d'alimentation donnée.

14. Machine d'emballage selon l'une des revendications précédentes, **caractérisée en ce que** la centrale saisit les puissances d'alimentation de tous les convoyeurs et/ou des dispositifs d'emballage en amont d'une table d'accumulation et **en ce que** la centrale est rapprochée du réglage de la table d'accumulation de plus faible puissance d'alimentation saisie, celle-ci n'étant de préférence pas dépassée négativement.

15. Machine d'emballage selon l'une des revendications précédentes, **caractérisée en ce que** la centrale ajuste les vitesses seuil et les réglages des dispositifs d'emballage de sorte que le débit reste constant dans la machine d'emballage.

16. Procédé de fonctionnement d'une machine d'emballage selon l'un des revendications précédentes, **caractérisé en ce que**
- au moins la vitesse réelle du convoyeur d'entrée et du convoyeur de sortie des dispositifs d'emballage ainsi que de la bande transporteuse sont déterminées,
- le débit réel des paquets du convoyeur d'entrée et du convoyeur de sortie des dispositifs d'emballage ainsi que de la bande transporteuse sont déterminés, et
- en fonction du débit réel des paquets et de la vitesse réelle, au moins les vitesses seuil du convoyeur d'entrée et du convoyeur de sortie des dispositifs d'emballage ainsi que de la bande transporteuse sont déterminées de sorte que les emballages soient séparés les uns des autres au moins d'une distance minimale.
